# EUROPEAN PATENT SPECIFICATION

(11) **EP 0 829 521 B1**
(45) Date of publication and mention of the grant of the patent: **04.05.2005**
(21) Application number: 97115853.0
(22) Date of filing: 11.09.1997
(51) Int. Cl.: C08L 101/02, C08L 83/04

(54) **Flame retardant resin composition**
Flammhemmende Kunstharzzusammensetzung
Composition de résine retardatrice de flamme

(30) Priority: 11.09.1996 JP 24081996
(43) Date of publication of application: 18.03.1998
(73) Proprietor: NEC CORPORATION, Tokyo (JP)
(72) Inventor: Serizawa, Shin, Minato-ku, Tokyo (JP); Iji, Masatoshi, Minato-ku, Tokyo (JP)
(74) Representative: Glawe, Delfs, Moll & Partner

(56) References cited:
- EP-A- 0 415 070
- US-A- 5 391 594

## Description

The present invention relates to a flame retardant resin composition, and more particularly to a silicone resin acting as a flame retarder which provides a flame retardancy to non-silicone resin composition containing aromatic ring.

Flame retardant resin compositions have been widely used for electric and electronic components and devices, building materials, automobile parts, daily necessities and the like. In general, such base material resin compositions are added with an organic halogen compound or added with both an organic halogen compound and antimony trioxide so that the base material resin compositions are provided with the flame retardancy. Such the flame retardant resin material has a disadvantage that burning this flame retardant resin material causes generation of harmful halogen based gases.

It has been known by one skilled in the art that in order to avoid the above disadvantage it is effective to add the base material resin composition with silicone thereby to provide the flame retardancy to the base material resin composition without generation harmful halogen based gases when burning.

Silicone (organopolysiloxane) comprises at least any of the following four units (M-unit, D-unit, T-unit and Q-unit). Silicone resin in general includes at least any of T-unit and Q-unit.
- M-unit :: uni-functionality R₃SiO_{0.5}
- D-unit :: bi-functionality R₂SiO₁
- T-unit :: tri-functionality RSiO_{1.5}
- Q-unit :: quadri-functionality SiO₂

In the Japanese laid-open patent publication No. 1-318069, it is disclosed that a thermoplastic material is provided with a flame retardancy by powdered polymer mixture which comprises a thermoplastic polymer and a silicone resin (RₓSi(OR')_{y}O_{(4-x-y)/2}) consisting of all of the above four units and also having either alkoxyl group or hydroxyl group.

In the Japanese laid-open patent publication No. 2-150436, it is disclosed that a thermoplastic material is provided with a flame retardancy by a mixture of the normal silicone powder such as dimethyl-silicone, metal hydroxide and zinc compound.

In the Japanese patent publication No. 62-60421, it is disclosed that a thermoplastic non-silicone polymer is provided with a flame retardancy by polysiloxane containing 80 % by weight or more of T-unit represented by RSiO_{1.5}. Particularly, it is preferable for providing the flame retardant to the polymer component that the molecular weight of the polysiloxane resin is not less than 2000 and not more than 6000 and R in the formula comprises not more than 80mol% of phenyl group and the remaining percents of methyl group.

In the Japanese patent publication No. 3-48947, it is disclosed that a thermoplastic material is provided with a flame retardancy by a silicone resin, particularly a MQ silicone which comprises M-unit of R₃SiO_{0.5} and Q-unit of SiO₂, silicone and Group IIA metal salts.

In the Japanese laid-open patent publication No. 1-318069 or No. 2-150436, the use of normal silicone resin alone results in an insufficient flame retardancy, for which reason flame retarder such as halogen based compounds, phosphorus based compounds, metal hydroxide may be used and added.

The specific silicone resins disclosed in the Japanese patent publications Nos. 62-60421 and 3-48947 have to be added at a large amount for obtaining a sufficient flame retardancy.

In the Japanese patent publication No. 62-60421, 10 parts by weight to 300 parts by weight of silicone resin, preferably 20 parts by weight to 100 parts by weight, are added to 100 parts by weight of non-silicone resin for flame retardancy. It is however disadvantageous that addition of such large amount of silicone resin results in remarkable deterioration of moldability and mechanical strength of the resin composition.

US-A-5,391,594 discloses an organosiloxane co-polymer resin containing five different types of units, namely 7.2 mod-% of CH₃SiO_{1.5} units, 24 mol-% of (CH₃)₂SiO_{1.0} units, 3.2 mol-% of (CH₃)₃SiO_{0.5} units, 15.4 mol-% of (CH=CH)(CH₃)SiO_{1.0} units and 50 mol-% of PhSiO_{1.5} units (Ph being a phenyl group). A modified resin composition having improved flame retarding characteristics can be obtained by mixing the organosiloxane co-polymer resin and silica powder as a filler into an organic resin.

In the above circumstances, it had been required to develop a flame retardant resin composition having a high flame retardancy with addition of a small amount of silicone resin, and also having high moldability and mechanical strength.

Accordingly, it is an object of the present invention to provide a novel flame retardant resin composition free from the above problems and disadvantages.

It is a further object of the present invention to provide a novel flame retardant resin composition having a high flame retardancy with addition of a small amount of silicone resin.

It is a still further object of the present invention to provide a novel flame retardant resin composition having a high moldability.

It is yet a further object of the present invention to provide a novel flame retardant resin composition having a high mechanical strength.

It is yet a further object of the present invention to provide a novel flame retardant resin composition which generates almost no harmful halogen based gases when burning this flame retardant resin composition.

The above and other objects, features and advantages of the present invention will be apparent from the following description.

The present invention provides a novel flame retardant resin composition which comprises a silicone resin having specific structure and molecular weight and a non-silicone resin having aromatic-ring. The silicone resin has R₂SiO_{1.0} units and RSiO_{1.5} units. The molecular weight of the silicone resin is not less than 10000 provided that the silicone resin is mixable with the non-silicone resin having aromatic-ring. R is a saturated or aromatic ring hydrocarbon group.

The above aromatic ring may be rings which fall into aromatic rings such as benzene ring, condensed benzene ring, non-benzene aromatic ring, complex aromatic ring. The following naphthalene ring is one example of a condensed benzene ring and the following pyrrol ring is one example of a complex aromatic ring.

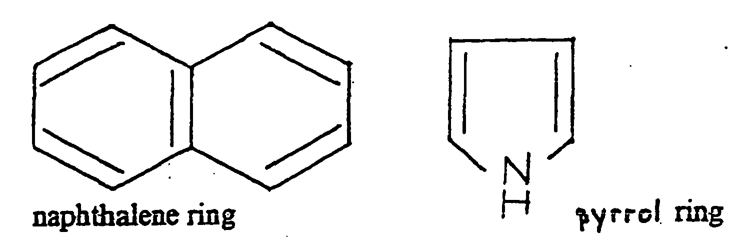

The above non-silicone resin may be thermoplastic resins having aromatic ring such as aromatic polycarbonate resin, alloys of aromatic polycarbonate resin, copolymers of acrylonitrile-butadiene-styrene (ABS) and polystyrene resin and also may be thermosetting resin having aromatic ring such as epoxy resin having aromatic ring and phenol resin having aromatic ring. Further, the above non-silicone resin may be a mixture of a plurality of the above resins. Aromatic polycarbonate resin is preferable for providing flame retardancy.

As described above, the silicone resin has R₂SiO_{1.0} units referred to as D-unit and RSiO_{1.5} units referred to as T-unit. R is a saturated or aromatic ring hydrocarbon group. The molecular weight of the silicone resin is not less than 10000 provided that the silicone resin is mixable with the non-silicone resin having the aromatic-ring. If the molecular weight of the silicone resin is less than 10000, then it is difficult to mix the silicon resin into the base material, resulting in insufficient flame retardancy effect. If, however, the molecular weight of the silicone resin is extremely high, then an excessively high melting viscosity is obtained thereby lowering the mixability and moldability of the silicone resin with the non-silicone. For example, the preferable molecular weight may be in the range of 10000 to 300000.

A preferable molar ratio of the R₂SiO_{1.0} units to the RSiO_{1.5} units is in the range of 0.5 to 7. It is preferable that R₂SiO_{1.0} is included in the silicone resin in the range of 15% by weight to 75 % by weight. If R₂SiO_{1.0} is included in the silicone resin at less than 15% by weight, then it is difficult to mix the silicone resin into the non-silicone resin as the base material and also then the flame retardancy is deteriorated. If, however, R₂SiO_{1.0} unit is included in the silicone resin at less than 15% by weight, then the flame retardancy is deteriorated.

R in the R₂SiO_{1.0} units and RSiO_{1.5} units may preferably be methyl groups and phenyl groups. More preferably, the molar ratio of phenyl groups to R in R₂SiO_{1.0} and RSiO_{1.5} may be in the range of 20% to 80%. If the molar ratio of phenyl groups to R in R₂SiO_{1.0} and RSiO_{1.5} is less than 20%, then it is difficult to mix the silicone resin into the non-silicone resin as the base material and also then the flame retardancy is deteriorated. If, however, the molar ratio of phenyl groups to R in R₂SiO_{1.0} and RSiO_{1.5} is more than 80%, then the flame retardancy is deteriorated.

It is preferable that the bridging terminal group of the silicone resin is terminated or ended with R'₃⁻SiO_{0.5} and R' is methyl group or phenyl group.

It is possible that a single kind of the silicone resin is mixed to a singe kind of the non-silicone resin.

It is also possible that a plurality of kinds of the silicone resin is mixed to a singe kind of the non-silicone resin.

It is also possible that a single kind of the silicone resin is mixed to a plurality of kinds of the non-silicone resin.

It is also possible that a plurality of kinds of the silicone resin is mixed to a plurality of kinds of the non-silicone resin.

It is possible to add a reinforcing agent into the flame retardant resin composition. The reinforcing agent may be antioxidant, neutralizer, ultraviolet ray absorbent, anti-static agent, pigment, dispersing agent, lubricant, thickener, filler and the others mixable in the resin composition.

The following description will focus on a method of preparing the above flame retardant resin composition in accordance with the present invention.

As the non-silicone resin having aromatic ring, used are aromatic polycarbonate resin, alloys of aromatic polycarbonate resin, copolymers of acrylonitrile-butadiene-styrene (ABS) and polystyrene resin and also may be thermoplastic resin having aromatic ring such as epoxy resin having aromatic ring and phenol resin having aromatic ring. Further, the above non-silicone resin may be a mixture of a plurality of the above thermoplastic resins.

The silicone resin may be prepared by the general method. Namely, in accordance with the molecular weight of the silicone resin component and the ratio of the R₂SiO_{1.0} units to the RSiO_{1.5} units, diorganochlorosilane and monoorganochlorosilane are hydrolyzed and partially condensed to form a silicone resin. Further, the silicone resin is then reacted with triorganochlorosilane to terminate polymerization whereby the silicone resin is terminated with the bridging terminal group of R₃SiO_{0.5}.

The property of the silicone resin depends upon the molecular weight, the ratio of the R₂SiO_{1.0} to the RSiO_{1.5} units and the ratio of phenyl group to methyl group in R. The general formula of the silicone resin is as follows.

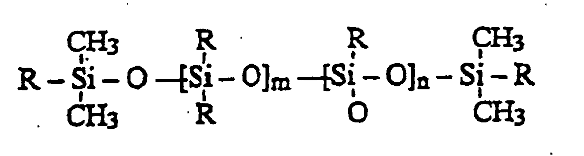

The molecular weight of the silicone resin is not less than 10000 provided that the silicone resin is mixable with the non-silicone resin having aromatic-ring. The molecular weight of the silicone resin is controllable by controlling the time of reaction for preparing the silicone resin.

The ratio of the R₂SiO_{1.0} units to the RSiO_{1.5} units in the silicone resin is adjustable by the amounts of diorganochlorosilane and monoorganochlorosilane. Chlorine in the raw material for the silicone resin is made into hydrochloric acid during the hydrolyzing reaction whereby no chlorine is included in the silicone resin. The molar ratio of R₂SiO_{1.0} units to RSiO_{1.5} units is in the range of 0.5 to 7. Namely, it is preferable that R₂SiO_{1.0} unit is included in the silicone resin in the range of 15% by weight to 75 % by weight. The ratio of these units and the ratio of phenyl group to methyl group in R is adjustable by the amounts in use of both methyl-silane system raw material such as dimethylchlorosilane and monomethylchlorosilane and phenyl silane system raw material such as diphenylchlorosilane and monophenylchlorosilane.

The non-silicone resin and the silicone resin component are weighed and mixed with each other to be formed by the same apparatus as when used to form plastic material. Namely, a mixer such as nbbon blender is used to pre-mix and disperse the non-silicone resin and the silicone resin separately and than a milling and mixing device such as Bumbury's roll and extruder is used to mix the non-silicone resin and the silicone resin to form the intended material. If the silicone resin is not solid at ordinary temperature, then the silicone resin is mixable with the non-silicone resin by using the mixer.

After mixing the silicone resin to the non-silicone resin, the mixture is molded by injection molding, extrusion molding, condensation molding and vacuum molding thereby to obtain the flame retardant resin material.

After molding, in accordance with JIS K7201(burning examination of polymer material in oxygen index.) the evaluation on flame retardancy is made. The burning examination of polymer material in oxygen index means a method for confirming whether nor not a predetermined size sample peace is continuously burned for a time not less than 3 minutes and also determining a minimum flow rate of oxygen and a corresponding nitrogen flow rate both of which are necessary for continuing the flame length of not less than 50 mm. The confirmed minimum oxygen concentration is oxygen index. As the oxygen index is high, then the flame retardancy is high.

As described above, the novel flame retardant resin composition comprises a silicone resin having specific structure and molecular weight and a non-silicone resin having aromatic-ring. The silicone resin has units of R₂SiO_{1.0} and units of RSiO_{1.5}. The molecular weight of the silicone resin is not less than 10000 provided that the silicone resin is mixable with the non-silicone resin having aromatic-ring, R is a saturated or aromatic ring hydrocarbon group. The novel flame retardant resin composition in accordance with the present invention has a high flame retardancy with addition of a small amount of silicone resin without, however, generation of harmful halogen based gases when burning this flame retardant resin composition.

### Example 1 :

Fifteen kinds of silicone resins "a", "b", "c", "d", "e", "f", "g", "h", "i", "j", "k", "l", "m", "n" and "o" were synthesized while varying the molecular weight of the silicone resin and the ratio of R₂SiO_{1.0} units to RSiO_{1.5} units as well as the ratio of phenyl group to methyl group in the hydrocarbon group R. R including the terminal group comprises phenyl group and methyl group. The following table I shows the molecular weight of the silicone resin and the ratio of R₂SiO_{1.0} units to RSiO_{1.5} units well as the ratio of phenyl group to methyl group in the hydrocarbon group R for every silicone resin "a", "b", "c", "d", "e", "f", "g", "h", "i", "j", "k", "l", "m", "n" and "o".

**TABLE 1**

| Resin | Molecular Weight | R₂SiO_{1.0}-To-RSiO_{1.5} Ratio | Phenyl-To-Methyl Ratio |
|---|---|---|---|
| "a" | 5,000 | 0:1 | 70:30 |
| "b" | 6,000 | 1:1 | 25:75 |
| "c" | 8,000 | 1:0.4 | 70:30 |
| "d" | 12,000 | 0:1 | 00:100 |
| "e" | 40,000 | 1:0 | 40:60 |
| "f" | 12,000 | 1:0.41 | 15:85 |
| "g" | 25,000 | 1:7.5 | 85:15 |
| "h" | 50,000 | 1:7.5 | 85:15 |
| "i" | 12,000 | 1:0.5 | 15:85 |
| "j" | 50,000 | 1:6.5 | 85:15 |
| "k" | 12,000 | 1:0.5 | 50:50 |
| "l" | 40,000 | 1:1 | 40:60 |
| "m" | 50,000 | 1:3 | 75:25 |
| "n" | 120,000 | 1:6.5 | 25:75 |
| "o" | 300,000 | 1:3 | 60:40 |

The novel flame retardant resin composition comprises a silicone resin having specific structure and molecular weight and a non-silicone resin having aromatic-ring. The silicone resin has units of R₂SiO_{1.0} and units of RSiO_{1.5}. The molecular weight of the silicone resin is not less than 10000 provided that the silicone resin is mixable with the non-silicone resin having aromatic-ring. R is a saturated or aromatic ring hydrocarbon group. The silicone resins "f", "g", "h", "i", "j", "k", "l", "m" and "n" are the resin to be used in the novel flame retardant resin composition in the preferred examples according to the present invention. By contrast, the silicone resins "a", "b", "c", "d", "e" and "o" are the resin to be used in the flame retardant resin composition in the comparative examples. The silicone resin "o" is too high in molecular weight and melting viscosity to be mixed with the non-silicone resin, for example, polycarbonate resin.

As the non-silicone resin, used was bis-phenol A-polycarbonate resin (Sumitomo Dow Co - Calibre 301-10) or alloys of bisphenol - A polycarbonate resin (Sumitomo Dow Co - Calibre 301-10) and ABS (Sumitomo Dou Co - H-270, hereinafter referred to as PC/ABS), or polystyrene resin (Shinnitetsu Chemical H-65). The silicone resin and the non-silicone resin were milled and mixed with an extruder mixer at a temperature of 280°C when polycarbonate resin is used or at a temperature of 260°C when PC/ABS is used or at a temperature of 220°C when polystyrene resin is used.

The resin composition was molded at a temperature of 270°C when the polycarbonate is used at a temperature of 240°C when PC/ABS alloy is used, or at a temperature of 200°C when polystyrene is used.

The molded plate is processed to a sample piece of a length 150 mm, a width of 6.5±0.5 mm so that in accordance with JIS K7201(burning examination of polymer material in oxygen index),the evaluation on flame retardancy is made to find oxygen index.

The following Table 2 shows the amount of the silicone resin with reference to 100 parts by weight of the non-silicone resin and the oxygen index for every resin composition in preferred examples according to the present invention.

The following Table 3 shows the amount of the silicone resin with reference to 100 parts by weight of the non-silicone resin and the oxygen index for various resin compositions in comparative example when no silicone resin is added or when the molecular weight is less than 10000 or when the silicone resin does not have both the R₂SiO_{1.0} and RSiO_{1.5} units.

**TABLE 2**

| | Example 1 | Example 2 | Example 3 |
|---|---|---|---|
| Polycarbonate (non-silicone) | 100 | 100 | 100 |
| Silicone resin "f' | 4 | - | - |
| Silicone resin "g" | - | 4 | - |
| Silicone resin "h" | - | - | 4 |
| Evaluation (oxygen index) | 31 | 30 | 31 |
| | (Unit :parts by weight) | | |

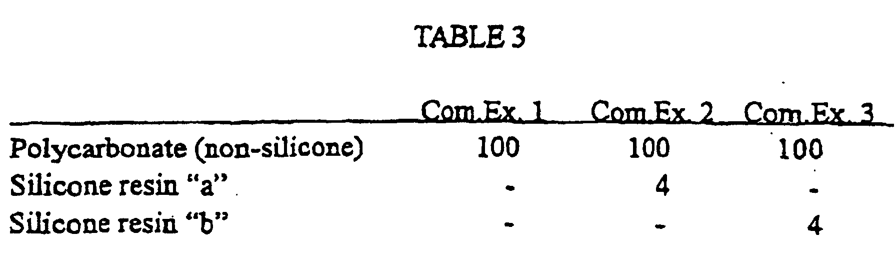

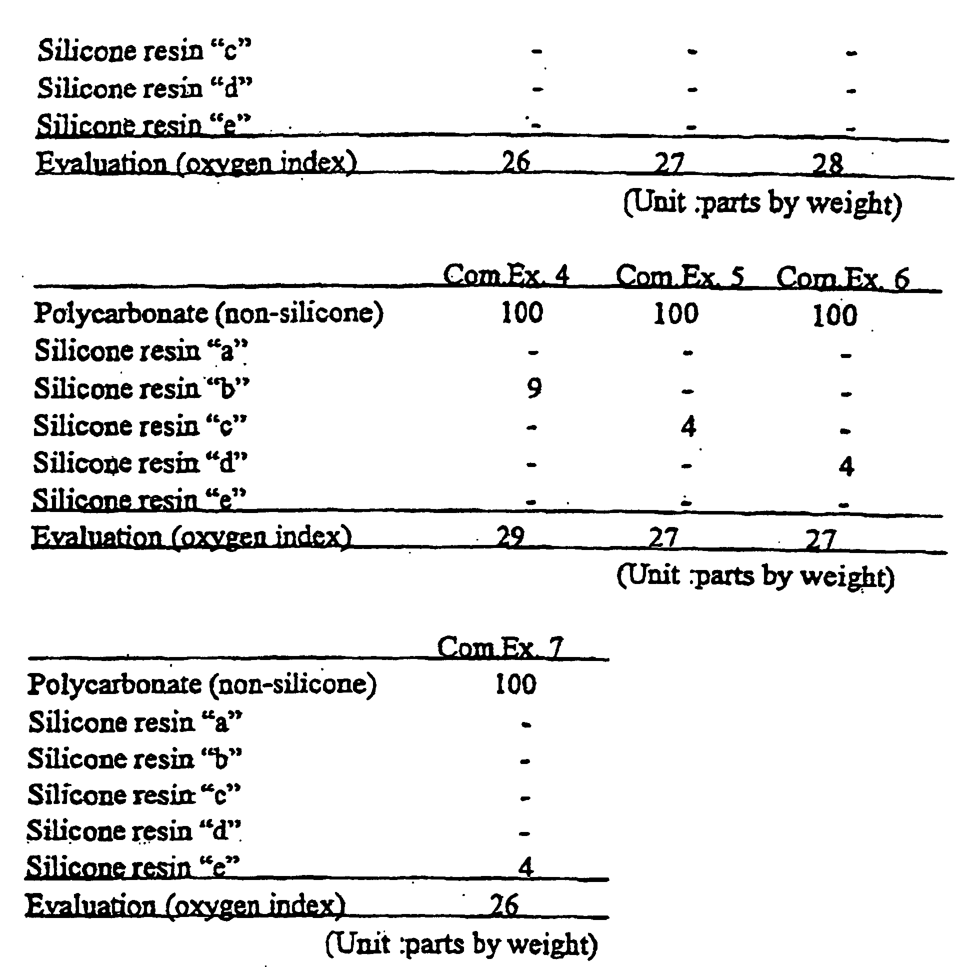

From Tables 2 and 3, it is understood that the polycarbonate resin compositions containing the silicone resins "f", "g", "h" in Examples 1, 2 and 3 are higher in oxygen index than the polycarbonate resin compositions containing the silicone resins "a", "b", "c", "d", "e" in Comparative Examples 2-7 and also than the polycarbonate resin free of silicone resin in Comparative Example 1. The flame retardant resin compositions of Examples 1, 2 and 3 are higher in flame retardancy than Comparative Examples 1-7.

The following Table 4 shows the dependency of the oxygen index upon the ratio of R₂SiO_{1.0} to RSiO_{1.5} and the ratio of methyl group and phenyl group.

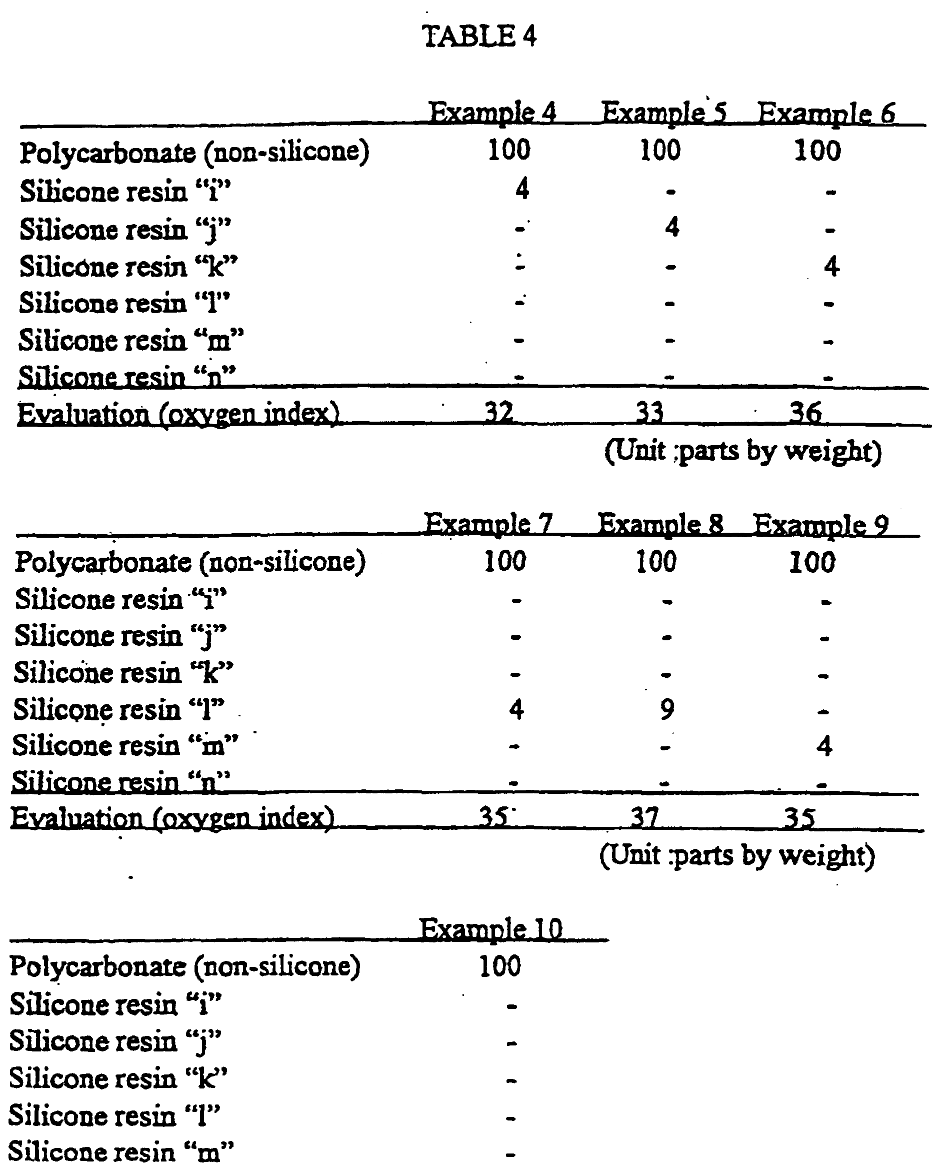

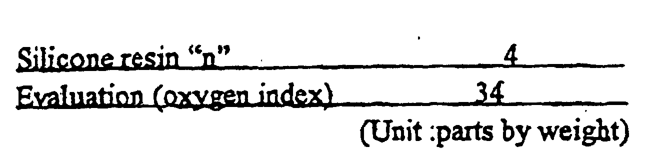

From Examples 4 and 5, it is understood that the polycarbonate resin compositions containing the silicone resins "i", "j" in Examples 4 and 5 are high in oxygen index than the polycarbonate resin compositions containing the silicone resins in Examples 1-3 and in Comparative Examples 1-7. The flame retardant resin compositions of Examples 4 and 5 are higher in flame retardancy than Examples 1-3 and Comparative Examples 1-7.

From Examples 6-10, it is understood that the polycarbonate resin compositions containing the silicone resins "k", "l", "m", "n" in Examples 6-10 are high in oxygen index than the polycarbonate resin compositions containing the silicone resins in Examples 1-5 and in Comparative Examples 1-7. The flame retardant resin compositions of Examples 6-10 are higher in flame retardancy than Examples 1-5 and Comparative Examples 1-7.

The following Table 5 shows the dependency of the oxygen index when PC/ABS is used.

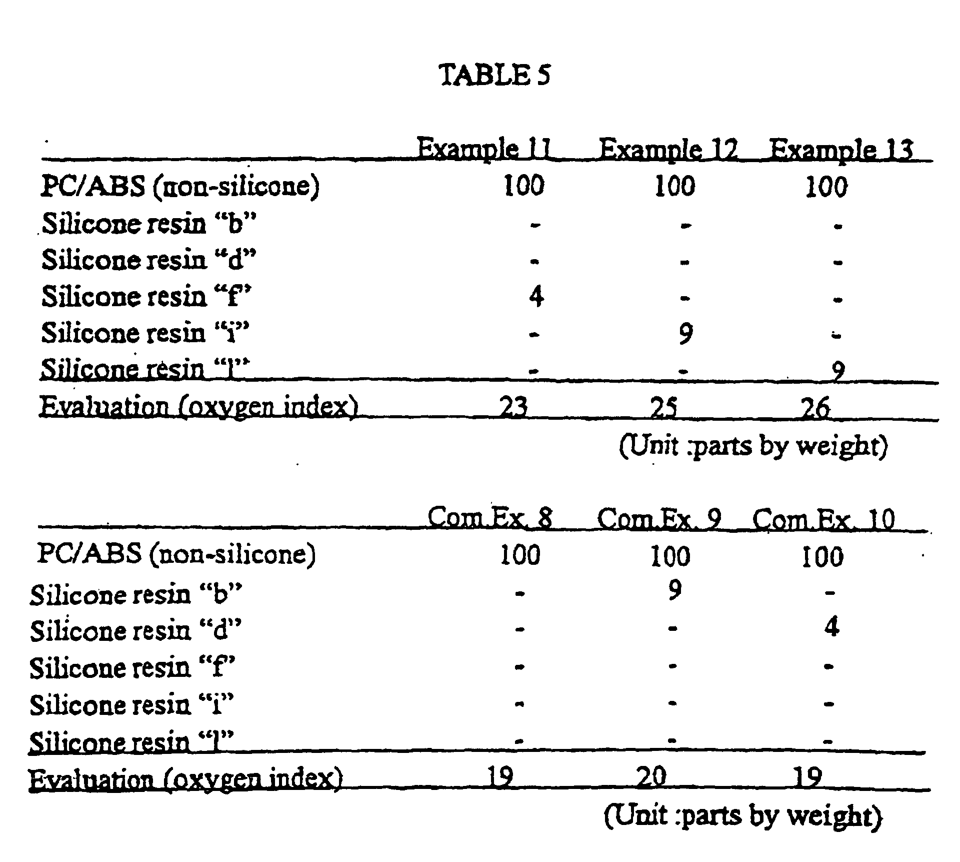

From Examples 11-13, it is understood that the PC/ABS resin compositions containing the silicone resins in Examples 11-13 are higher in oxygen index than the PC/ABS resin compositions containing the silicone resins in Comparative Examples 8-10. The flame retardant resin compositions of Examples 11-13 are higher in flame retardancy than Comparative Examples 8-10.

The following Table 6 shows dependency of the oxygen index when polystyrene is used.

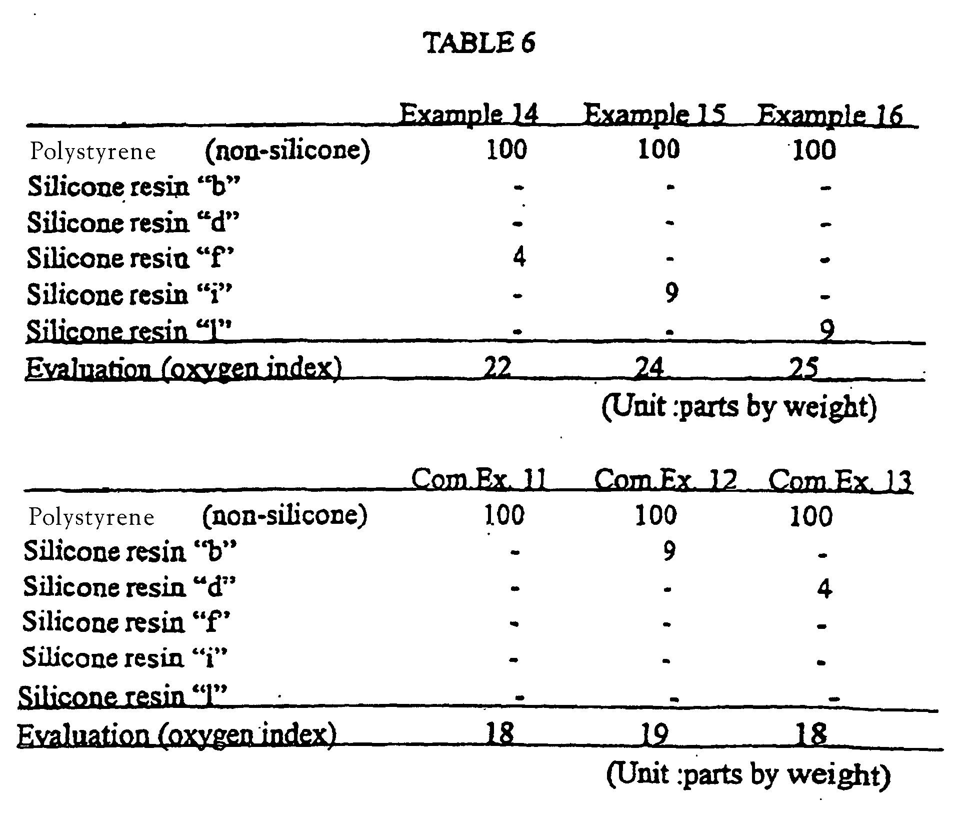

From Examples 14-16, it is understood that the polystyrene resin compositions containing the silicone resins in Examples 14-16 are higher in oxygen index than the polystyrene resin compositions containing the silicone resins in Comparative Examples 11-13. The flame retardant resin compositions of Examples 14-16 are higher in flame retardancy than Comparative Examples 11-13.

Whereas modifications of the present invention will be apparent to a person having ordinary skill in the art, to which the invention pertains, it is to be understood that embodiments as shown and described by way of illustrations are by no means intended to be considered in a limiting sense. Accordingly, it is to be intended to cover all modifications which fall within the scope of the claims.

## Claims

1. A flame retardant resin composition which comprises a silicone resin and a non-silicone resin having an aromatic ring,
**characterized in that** said silicone resin consists of R₂SiO_{1,0} units, and RSiO_{1,5} units and terminal groups of R'₃SiO_{0,5},
wherein R is a saturated hydrocarbon group or an aromatic ring hydrocarbon group,
the molar ratio of said R₂SiO_{1,0} units to said RSiO_{1,5} units is in the range of 0,5 to 7, and
the molecular weight of said silicone resin is not less than 10 000 provided that said silicone resin is mixable with said non-silicone resin having the aromatic ring.

2. The flame retardant resin composition as claimed in claim 1, **characterized in that** said non-silicone resin comprises at least one selected from the group consisting of aromatic polycarbonate resins, alloys of aromatic polycarbonate resin, copolymers of acrylonitrile-butadiene-styrene, polystyrene resins, epoxy resins having aromatic ring and phenol resins having aromatic ring.

3. The flame retardant resin composition as claimed in claim 1, **characterized in that** said molecular weight is less than 300000.

4. The flame retardant resin composition as claimed in claim 3, **characterized in that** said molecular weight is not more than 120 000.

5. The flame retardant resin composition as claimed in claim 1, **characterized in that** R comprises methyl groups and phenyl groups.

6. The flame retardant resin composition as claimed in claim 5, **characterized in that** the molar ratio of said phenyl grous to R is in the range of 20% to 80%.

7. The flame retardant resin composition as claimed in claim 1, **characterized in that** R' is selected from the group consisting of methyl groups and phenyl groups.

8. The flame retardant resin composition as claimed in claim 1 **characterized in that** a single kind of said silicone resin is mixed to a single kind of said non-silicone resin.

9. The flame retardant resin composition as claimed in claim 1, **characterized in that** a plurality of kinds of said silicone resin is mixed to a single kind of said non-silicone resin.

10. The flame retardant resin composition as claimed in claim 1, **characterized in that** a single kind of said silicone resin is mixed to a plurality of kinds of said non-silicone resin.

11. The flame retardant resin composition as claimed in claim 1, **characterized in that** a plurality of kinds of said silicone resin is mixed to a plurality of kinds of said non-silicone resin.

12. The flame retardant resin composition as claimed in claim 1, **characterized in that** a reinforcing agent is added into said flame retardant resin composition.

13. The flame retardant resin composition as claimed in claim 12, **characterized in that** said reinforcing agent is at least one selected from the group consisting of antioxidants, neutralizers, ultraviolet ray absorbents, anti-static agents, pigments, dispersing agents, lubricants, thickeners and fillers.

## Patentansprüche

1. Flammhemmende Kunstharzzusammensetzung, die ein Silikonharz und ein Nicht-Silikonharz mit aromatischem Ring umfasst,
**dadurch gekennzeichnet, dass** das Silikonharz aus R₂SiO_{1,0}-Einheiten und RSiO_{1,5}-Einheiten sowie Endgruppen von R'₃SiO_{0,5} besteht,
wobei R eine gesättigte Kohlenwasserstoffgruppe oder eine aromatische Kohlenwasserstoff-Ringgruppe ist,
das Molverhältnis der R₂SiO_{1,0}-Einheiten zu den RSiO_{1,5}-Einheiten im Bereich von 0,5 bis 7 liegt, und
das Molekulargewicht des Silikonharzes nicht weniger als 10 000 beträgt, unter der Voraussetzung, dass das Silikonharz mit dem Nicht-Silikonharz mit aromatischem Ring mischbar ist.

2. Flammhemmende Kunstharzzusammensetzung nach Anspruch 1,
**dadurch gekennzeichnet, dass** das Nicht-Silikonharz mindestens ein Harz umfasst, das aus der Gruppe ausgewählt ist, welche besteht aus aromatischen Polycarbonatharzen, Legierungen von aromatischem Polycarbonatharz, Copolymeren von Acrylnitril-Butadien-Styrol, Polystyrolharzen, Epoxyharzen mit aromatischem Ring und Phenolharze mit aromatischem Ring.

3. Flammhemmende Kunstharzzusammensetzung nach Anspruch 1,
**dadurch gekennzeichnet, dass** das Molekulargewicht weniger als 300 000 beträgt.

4. Flammhemmende Kunstharzzusammensetzung nach Anspruch 3,
**dadurch gekennzeichnet, dass** das Molekulargewicht nicht mehr als 120 000 beträgt.

5. Flammhemmende Kunstharzzusammensetzung nach Anspruch 1,
**dadurch gekennzeichnet, dass** R Methylgruppen und Phenylgruppen umfasst.

6. Flammhemmende Kunstharzzusammensetzung nach Anspruch 5,
**dadurch gekennzeichnet, dass** das molare Verhältnis der Phenylgruppen zu R im Bereich von 20% zu 80% liegt.

7. Flammhemmende Kunstharzzusammensetzung nach Anspruch 1,
**dadurch gekennzeichnet, dass** R' ausgewählt ist aus der Gruppe, die aus Methylgruppen und Phenylgruppen besteht.

8. Flammhemmende Kunstharzzusammensetzung nach Anspruch 1,
**dadurch gekennzeichnet, dass** eine einzige Sorte von Silikonharz mit einer einzigen Sorte des Nicht-Silikonharzes gemischt ist.

9. Flammhemmende Kunstharzzusammensetzung nach Anspruch 1,
**dadurch gekennzeichnet, dass** mehrere Sorten des Silikonharzes mit einer einzigen Sorte des Nicht-Silikonharzes gemischt sind.

10. Flammhemmende Kunstharzzusammensetzung nach Anspruch 1,
**dadurch gekennzeichnet, dass** eine einzige Sorte des Silikonharzes mit einer Mehrzahl von Sorten des Nicht-Silikonharzes gemischt sind.

11. Flammhemmende Kunstharzzusammensetzung nach Anspruch 1,
**dadurch gekennzeichnet, dass** mehrere Sorten des Silikonharzes mit mehreren Sorten des Nicht-Silikonharzes gemischt sind.

12. Flammhemmende Kunstharzzusammensetzung nach Anspruch 1,
**dadurch gekennzeichnet, dass** ein Verstärkungsmittel in der flammhemmenden Kunstharzzusammensetzung hinzugefügt ist.

13. Flammhemmende Kunstharzzusammensetzung nach Anspruch 12,
**dadurch gekennzeichnet, dass** das Verstärkungsmittel mindestens eines ist, das aus der Gruppe ausgewählt ist, welche besteht aus Oxidationshemmern, Neutralisatoren, UV-Absorbern, antistatischen Mitteln, Pigmenten, Dispergiermitteln, Schmiermitteln, Verdickungsmitteln und Füllmitteln.

## Revendications

1. Composition de résine retardatrice de flamme qui comprend une résine silicone et une résine non silicone ayant un cycle aromatique,
**caractérisée en ce que** ladite résine silicone est constituée par des motifs de R₂SiO_{1,0}, et des motifs de RSiO_{1,5} et des groupes terminaux de R'₃SiO_{0,5},
où R est un groupe d'hydrocarbure saturé ou un groupe d'hydrocarbure à cycle aromatique,
le rapport molaire desdits motifs de R₂SiO_{1,0} sur lesdits motifs de RSiO_{1,5} se situe dans la gamme de 0,5 à 7, et
le poids moléculaire de ladite résine silicone n'est pas inférieur à 10 000 dans la mesure où ladite résine silicone peut être mélangée avec ladite résine non silicone ayant le cycle aromatique.

2. Composition de résine retardatrice de flamme comme revendiquée dans la revendication 1, **caractérisée en ce que** ladite résine non silicone comprend au moins l'un choisi dans le groupe constitué par des résines de polycarbonate aromatiques, des alliages de résine de polycarbonate aromatique, des copolymères d'acrylonitrile-butadiène-styrène, des résines de polystyrène, des résines époxy ayant un cycle aromatique et des résines de phénol ayant un cycle aromatique.

3. Composition de résine retardatrice de flamme comme revendiquée dans la revendication 1, **caractérisée en ce que** ledit poids moléculaire est inférieur à 300000.

4. Composition de résine retardatrice de flamme comme revendiquée dans la revendication 3, **caractérisée en ce que** ledit poids moléculaire n'est pas supérieur à 120000.

5. Composition de résine retardatrice de flamme comme revendiquée dans la revendication 1, **caractérisée en ce que** R comprend des groupes méthyles et des groupes phényles.

6. Composition de résine retardatrice de flamme comme revendiquée dans la revendication 5, **caractérisée en ce que** le rapport molaire desdits groupes phényles sur R se situe dans la gamme de 20 % à 80 %.

7. Composition de résine retardatrice de flamme comme revendiquée dans la revendication 1, **caractérisée en ce que** R' est choisi dans les groupes constitués par des groupes méthyles et des groupes phényles.

8. Composition de résine retardatrice de flamme comme revendiquée dans la revendication 1, **caractérisée en ce qu'**un seul type de ladite résine silicone est mélangée à un seul type de ladite résine non silicone.

9. Composition de résine retardatrice de flamme comme revendiquée dans la revendication 1, **caractérisée en ce qu'**une pluralité de types de ladite résine silicone est mélangée à un seul type de ladite résine non silicone.

10. Composition de résine retardatrice de flamme comme revendiquée dans la revendication 1, **caractérisée en ce qu'**un seul type de ladite résine silicone est mélangée à une pluralité de types de ladite résine non silicone.

11. Composition de résine retardatrice de flamme comme revendiquée dans la revendication 1, **caractérisée en ce qu'**une pluralité de types de ladite résine silicone est mélangée à une pluralité de types de ladite résine non silicone.

12. Composition de résine retardatrice de flamme comme revendiquée dans la revendication 1, **caractérisée en ce qu'**un agent renforçant est ajouté dans ladite composition de résine retardatrice de flamme

13. Composition de résine retardatrice de flamme comme revendiquée dans la revendication 12, **caractérisée en ce que** ledit agent renforçant est au moins l'un choisi dans le groupe constitué par des antioxydants, des neutralisants, des absorbants de rayons ultraviolets, des agents antistatiques, des pigments, des agents de dispersion, des lubrifiants, des épaississants et des charges.
